# FASCICULE DE BREVET EUROPEEN

(11) **EP 1 332 963 B1**
(45) Date de publication et mention de la délivrance du brevet: **29.06.2005**
(21) Numéro de dépôt: 03290158.9
(22) Date de dépôt: 22.01.2003
(51) Int. Cl.: B64C 25/00, B64C 25/58

(54) **Amortisseur de train d'atterrissage, et train d'atterrissage a jambes indépendantes équipees d'un tel amortisseur**
Fahrwerkstossdämpfer und Fahrwerk mit unabhängigen Fahrgestellstreben mit solchem Stossdämpfer
Landing gear shock absorber and independent legs type landing gear with such a shock absorber

(30) Priorité: 04.02.2002 FR 0201269
(43) Date de publication de la demande: 06.08.2003
(73) Titulaire: MESSIER-DOWTY SA, F-78140 Velizy Villacoublay (FR)
(72) Inventeur: Derrien, Michel, 78000 Versailles (FR); Locufier, Jean-François, 78120 Rambouillet (FR)
(74) Mandataire: Jaunez, Xavier

(56) Documents cités:
- EP-A- 0 614 804
- US-A- 5 310 140

## Description

La présente invention concerne un amortisseur de train d'atterrissage d'aéronef, ainsi qu'un train d'atterrissage relevable, du type à relevage vertical, comportant une pluralité de jambes indépendantes agencées les unes derrière les autres, et dont chaque jambe est équipée d'un tel amortisseur.

Il est connu de réaliser un amortisseur de jambe de train relevable d'aéronef, du type comportant un caisson et une tige coulissant dans ledit caisson, ladite tige comportant un fond délimitant une chambre inférieure de fluide hydraulique qui communique, par l'intermédiaire d'un diaphragme, avec une chambre supérieure de fluide hydraulique adjacente à une chambre de gaz sous pression ménagée en partie haute du caisson.

Dans certaines situations, lorsque l'aéronef est à l'arrêt ou en déplacement lent au sol, on souhaite pouvoir modifier l'assiette de l'aéronef, c'est-à-dire l'inclinaison de son axe longitudinal.

Dans le document US-A-5 310 140 de la demanderesse, on a illustré une approche consistant à modifier la longueur du train avant, sans toucher aux atterrisseurs principaux : en effet, si l'on parvient à allonger le train avant, on peut obtenir l'assiette désirée de l'aéronef qui est à l'arrêt ou en déplacement lent au sol. Le document précité illustre ainsi un atterrisseur de train avant équipé d'un amortisseur conçu pour réaliser un rehaussement de l'atterrisseur avant. La structure de l'amortisseur décrit dans ce document permet d'obtenir aisément un rehaussement du train lorsque l'aéronef est à l'arrêt ou en déplacement lent au sol, sans exiger l'utilisation de la génération hydraulique de l'aéronef, c'est-à-dire sans exiger que les moteurs soient activés.

On pourra également se référer au document US-A-5 310 139 de la demanderesse qui illustre un amortisseur de train avant conçu pour assurer la même fonction.

La présente invention s'intéresse plutôt aux amortisseurs équipant des trains d'atterrissage principaux d'avions gros porteurs, du type à relevage vertical, comportant une pluralité de jambes indépendantes agencées les unes derrière les autres pour former, en position train bas, une rangée parallèle au plan longitudinal de l'avion, et en extrémité de chacune desquelles est montée une paire de roues. Un tel train d'atterrissage relevable pour avion gros porteur est par exemple illustré dans le document EP-A-0 676 328 de la demanderesse.

L'invention a pour objet de concevoir un amortisseur de train d'aéronef du type précité, dont la structure permet un raccourcissement d'une ou plusieurs jambes réalisé lorsque l'aéronef est à l'arrêt ou en déplacement lent au sol. Un tel raccourcissement peut s'avérer en effet intéressant non seulement lorsque l'on veut modifier l'assiette de l'aéronef à l'arrêt, en particulier lors du chargement de l'aéronef, mais aussi dans d'autres situations particulières comme le changement de pneumatiques. En effet, dans cette dernière situation, on utilise classiquement des systèmes de crics permettant de relever la structure d'aéronef pour dégager le pneumatique à remplacer de son contact avec le sol. L'état de la technique le plus proche est illustré par le document EP-A-0 614 804 de la demanderesse qui illustre un amortisseur de train d'atterrissage d'aéronef conforme au préambule de la revendication 1. Il s'agit en l'espèce d'un train d'atterrissage à jambes indépendantes pour avion gros porteur. Chaque jambe de train comporte un vérin-amortisseur incluant un système d'affaissement commandé par la génération hydraulique de ladite jambe. Une première tige-piston est agencée à l'extrémité supérieure du corps du vérin-amortisseur pour assurer la fonction amortisseur, et une seconde tige-piston à piston mobile, est agencée à l'extrémité inférieure du même corps pour assurer une double fonction de relevage et de baraquage. Un tel agencement à butée intermédiaire hydraulique est cependant complexe, et nécessite d'utiliser trois verrous hydrauliques pour la commande, ce qui implique la présence de nombreux joints d'étanchéité, avec le risque d'affecter la fiabilité et la disponibilité.

Il existe donc un besoin d'un agencement plus simple, exempt de butée intermédiaire hydraulique et comportant un minimum de verrous hydrauliques, en vue d'une fiabilité et d'une disponibilité optimales.

Pour résoudre ce problème, l'invention propose un amortisseur de train d'atterrissage d'aéronef du type précité, dans lequel la chambre de fluide hydraulique de la tige-piston est une chambre supérieure, tandis que la chambre de gaz sous pression de ladite tige-piston est une chambre inférieure, et dans lequel la tige-piston est prolongée, au-delà de la chambre inférieure de gaz sous pression, par un fourreau dans lequel coulisse télescopiquement une tige-piston terminale creuse en formant une chambre inférieure de fluide hydraulique qui est fermée par un organe actionnable de verrouillage hydraulique, ladite tige-piston terminale délimitant avec le fourreau une chambre annulaire inférieure de fluide hydraulique qui est reliée à un circuit de commande associé, permettant ainsi de rallonger ou de raccourcir la longueur totale de l'amortisseur en commandant la sortie ou la rentrée de ladite tige-piston terminale, et ladite tige-piston terminale étant en outre équipée d'une chambre d'expansion servant à compenser les variations de volume du fluide hydraulique présent dans la chambre inférieure de fluide hydraulique, conformément à la partie caractérisante de la revendication 1.

De préférence, la chambre inférieure de fluide hydraulique est séparée de la chambre inférieure de gaz sous pression par une cloison intermédiaire de la tige-piston. Cet agencement permet une totale indépendance entre la partie absorbeur de choc et la partie barraquage, ce qui permet d'éliminer tout risque de mélange air-huile, lequel risque n'est jamais écarté lorsque l'on utilise des systèmes de joints qui peuvent être amenés à fuir.

De préférence alors, la cloison intermédiaire de la tige-piston constitue une butée de rentrée maximale de la tige-piston terminale dans le fourreau associé, ledit fourreau présentant intérieurement un épaulement intermédiaire formant butée de sortie maximale de ladite tige-piston terminale.

Avantageusement encore, la chambre d'expansion est réalisée sous la forme d'un accumulateur à air ou à ressort. Cet agencement permet de conserver une excellente fiabilité à la commande d'allongement ou de raccourcissement, quelle que soit la température extérieure régnant autour de l'aéronef.

Avantageusement enfin, le circuit de commande associé à la chambre annulaire inférieure de fluide hydraulique comporte une électrovanne actionnable individuellement.

L'invention concerne également un train d'atterrissage relevable d'aéronef, du type à relevage vertical, comportant une pluralité de jambes agencées les unes derrière les autres pour former, en position train bas, une rangée parallèle au plan longitudinal médian de l'aéronef, chaque jambe comportant un caisson tubulaire rigidement solidaire d'une structure d'aéronef, un balancier articulé sur l'extrémité inférieure dudit caisson de façon que ledit balancier soit déplaçable dans un plan vertical avec sa paire de roues, et un amortisseur interposé entre un appendice du balancier et un élément mobile faisant partie de la tringlerie de manoeuvre du train. Conformément à un autre aspect de l'invention, un tel train d'atterrissage relevage est remarquable en ce que l'amortisseur de chaque jambe est un amortisseur de type précité permettant de relever sélectivement au moins une paire de roues lorsque l'aéronef est à l'arrêt ou en déplacement lent au sol.

De préférence, les amortisseurs dudit train ont des circuits de commande agencés pour permettre une commande individuelle sélective ou une commande groupée du rallongement ou du raccourcissement desdits amortisseurs.

De préférence encore, les amortisseurs dudit train sont dimensionnés pour permettre une course de raccourcissement suffisante pour amener la paire de roues de l'une quelconque des jambes dudit train hors de contact avec le sol, par exemple pour un changement de pneumatique.

Avantageusement aussi, l'amortisseur de la jambe avant dudit train est dimensionné pour permettre une course de raccourcissement suffisante pour soulager le train lors d'un virage au sol, la paire de roues concernée étant hors de contact ou légèrement en contact avec le sol.

Avantageusement enfin, les organes de verrouillage hydraulique des amortisseurs sont commandables simultanément pour permettre, par leur ouverture, un barraquage naturel de l'aéronef par la seule charge statique exercée par ledit aéronef.

D'autres caractéristiques et avantages de l'invention apparaîtront plus clairement à la lumière de la description qui va suivre et des dessins annexés, concernant un mode de réalisation particulier, en référence aux figures où :
- la figure 1 est une coupe axiale illustrant un amortisseur conforme à l'invention,
- la figure 2A illustre un train d'atterrissage à trois jambes indépendantes dont chacune est équipée d'un amortisseur du type illustré en figure 1, la position étant train bas avec les trois paires de roues au même niveau,
- la figure 2B illustre le train de la figure 2A après un raccourcissement de l'amortisseur de la jambe avant, dont la paire de roues associée est relevée par rapport aux autre paires de roues,
- les figures 3A et 3B sont analogues aux figures 2A et 2B, et illustrent un train d'atterrissage à trois jambes indépendantes d'un type différent, respectivement en position train bas normal et en position de relevage partiel de la paire de roues de la jambe avant.

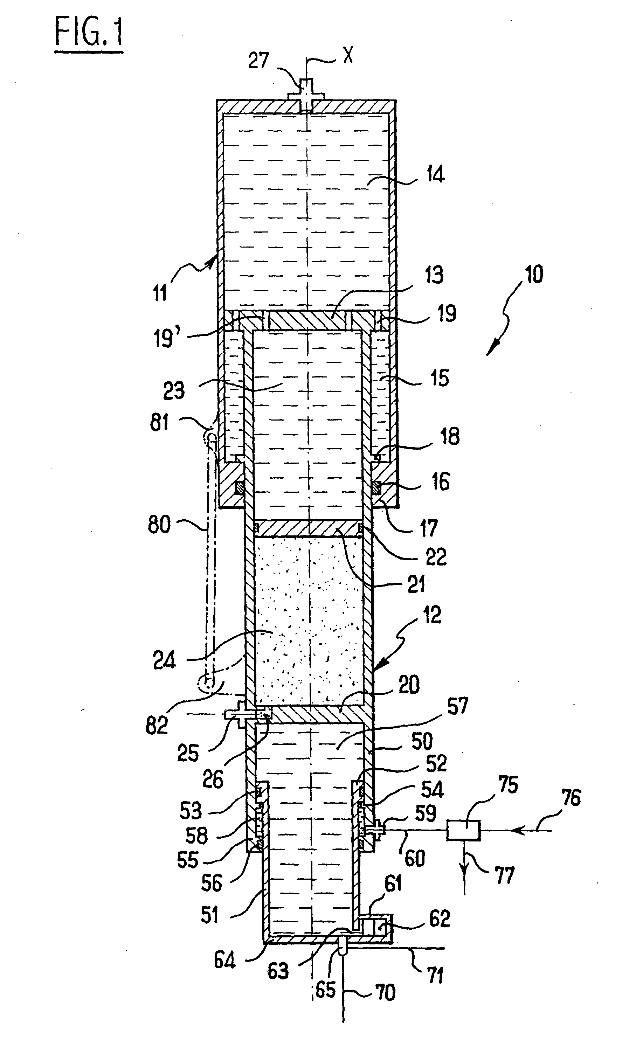

La figure 1 illustre un amortisseur 10 de jambe de train d'atterrissage d'aéronef conforme à l'invention, comportant un caisson 11 et une tige piston 12 coulissant dans ledit caisson coaxialement à l'axe X de celui-ci.

La partie supérieure de l'amortisseur 10, qui est dédiée à la fonction classique d'absorbeur de chocs et de vibrations, est de structure classique. A cet effet, la tige-piston 12 délimite avec le caisson 11 une chambre principale 14 de fluide hydraulique et une chambre annulaire 15 de fluide hydraulique communiquant avec ladite chambre principale 14 par l'intermédiaire d'un diaphragme associé 19. La tige-piston 12 présente une extrémité supérieure 13 formant piston, qui coulisse contre la surface intérieure du caisson 11. La tige-piston 12 présente intérieurement deux chambres adjacentes 23, 24 qui sont isolées l'une de l'autre par un piston séparateur 21, dont une chambre supérieure 23 de fluide hydraulique qui communique avec la chambre principale précitée 14 par l'intermédiaire d'un diaphragme associé 19', et une chambre inférieure 24 de gaz sous pression.

Les courses axiales de la tige-piston 12 coulissant téléscopiquement dans le caisson 11 sont délimitées supérieurement par le contact du piston 13 avec la paroi haute du caisson 11, et inférieurement par la mise en butée d'un épaulement 18 de la tige-piston 12 avec l'extrémité inférieure 17 de plus forte épaisseur du caisson 11, laquelle extrémité est équipée de joints dynamiques 16. On a représenté en 27 la vanne de chargement servant à remplir le caisson 11 et la partie haute de la tige-piston 12 en fluide hydraulique. On a également représenté, au niveau de l'extrémité inférieure de la chambre 24 de gaz sous pression, c'est-à-dire en l'espèce au niveau d'une cloison 20 de la tige-piston 12, une vanne 25 de chargement en gaz sous pression, qui communique avec l'intérieur de la chambre 24 par un passage associé 26 ménagé dans la cloison 20.

Conformément à un aspect essentiel de l'invention, la tige-piston 12 est prolongée, au-delà de la chambre inférieure 24 de gaz sous pression, par un fourreau 50 dans lequel coulisse télescopiquement une tige-piston terminale creuse 51 en formant une chambre inférieure 57 de fluide hydraulique qui est fermée par un organe actionnable 65 de verrouillage hydraulique, ladite tige-piston terminale 51 délimitant avec le fourreau 50 une chambre annulaire inférieure 58 de fluide hydraulique qui est reliée à un circuit de commande associé, permettant ainsi de rallonger ou de raccourcir la longueur totale de l'amortisseur 10 en commandant la sortie ou la rentrée de ladite tige-piston terminale 51.

La tige-piston terminale creuse 51 présente un piston 52 qui coulisse avec étanchéité, grâce à un joint dynamique 53, contre la surface intérieure cylindrique du fourreau 50. La course axiale de la tige-piston terminale creuse 51 est délimitée supérieurement par le contact entre le piston 52 et la cloison intermédiaire 20, et inférieurement par la butée du même piston 52 contre un épaulement intermédiaire 54 ménagé sur la surface intérieure du fourreau 50. La partie inférieure du fourreau 50 présente une partie plus large 55 portant un joint dynamique 56 au contact de la surface extérieure de la tige-piston terminale creuse 51.

On comprend aisément que, lorsque du fluide hydraulique est amené dans la chambre annulaire 58, la tige-piston terminale creuse 51 remonte dans le fourreau associé 50, ce qui a pour effet de raccourcir la longueur totale de l'amortisseur 10. Simultanément, il convient d'expulser le volume correspondant de fluide hydraulique de la chambre 57, ce qui est assuré en prévoyant, dans le fond terminal 64 de la tige-piston terminale 51, un organe actionnable 65 de verrouillage hydraulique auquel aboutissent une ligne 70 correspondant au remplissage ou au vidage partiel de fluide hydraulique dans la chambre 57, et une ligne 71 d'alimentation pour le déverrouillage. Le circuit de commande associé à la chambre annulaire inférieure 58 comporte une valve de communication 59 fixée à travers la paroi du fourreau 50, à laquelle aboutit une ligne 60 de fluide hydraulique reliée à une électrovanne de commande 75. Cette électrovanne 75 est reliée à une ligne d'amenée de fluide 76 et une ligne de sortie de fluide 77. De préférence, cette électrovanne 75 est actionnable individuellement, ce qui est intéressant, comme on le verra par la suite, pour l'actionnement d'un amortisseur spécifique de jambes individuelles de train d'atterrissage, sans que les amortisseurs des autres jambes ne soient concernés.

On notera également une extension latérale inférieure 61 prévue en partie basse de la tige-piston terminale 51, dont l'espace intérieur est en communication avec la chambre 57 par l'intermédiaire d'un petit passage 63. Cette extension 61 renferme une chambre d'expansion 62 servant à compenser les variations de volume du fluide hydraulique présent dans la chambre inférieure 57 de fluide hydraulique. Cette chambre d'expansion 62 pourra être par exemple réalisée sous la forme d'un accumulateur à air ou à ressort. Ceci permet de conserver une bonne fiabilité aux mouvements d'allongement ou de raccourcissement de la longueur de l'amortisseur quelle que soit la température extérieure régnant autour de l'aéronef.

On a également représenté en trait mixte des organes mécaniques de type classique associés à un blocage de course, sous la forme d'une barrette anti-détente 80 qui est accrochée en partie haute sur un appendice 81 du caisson 11, et en partie basse sur un appendice 82 de la tige-piston 12. Il s'agit d'éléments d'outillage qui servent par exemple lors d'un changement de pneumatique, ainsi qu'on le verra plus loin.

On va maintenant illustrer deux trains d'atterrissage principaux, du type à jambes indépendantes relevables verticalement, dont chaque jambe est équipée d'un amortisseur du type qui vient d'être décrit. Ceci permettra de mieux comprendre les nombreux avantages présentés par la structure de l'amortisseur conforme à l'invention, dans différentes situations pour l'aéronef ainsi équipé à l'arrêt ou en position de roulage sur piste.

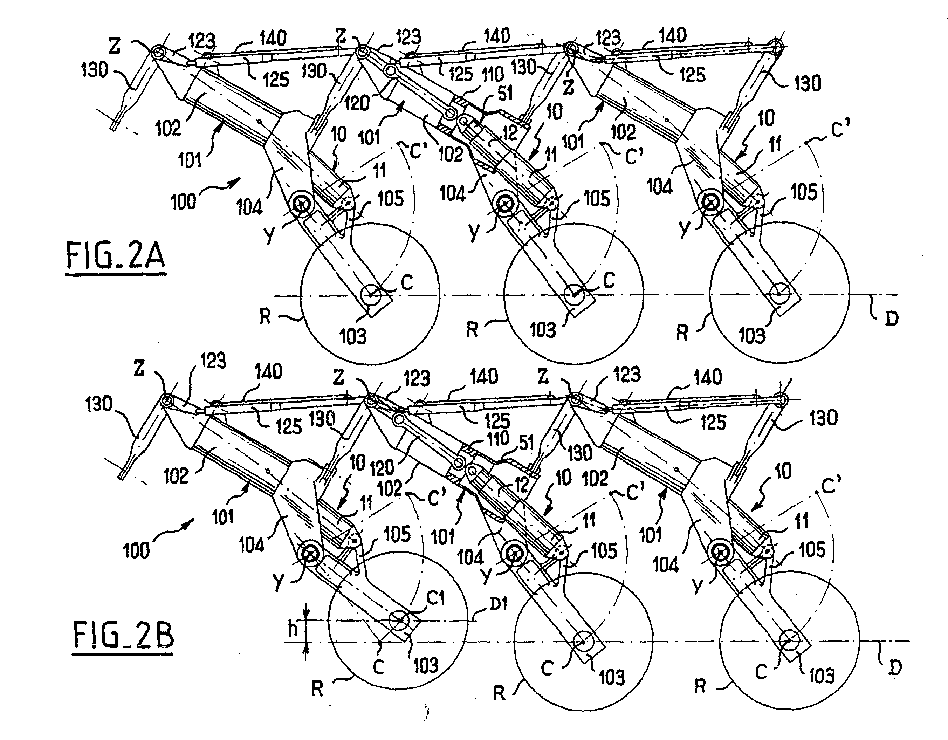

Les trains d'atterrissage illustrés aux figures 2A et 2B, puis 3A et 3B sont de type connu, de sorte que leur structure sera décrite très rapidement.

On distingue sur la figure 2A un train d'atterrissage 100 pour avion gros porteur, du type à relevage vertical, comportant une pluralité de jambes 101 agencées les unes derrière les autres pour former, en position train bas (position illustrée en l'espèce), une rangée parallèle au plan longitudinal médian de l'avion. En l'espèce, ce train principal comporte trois jambes indépendantes 101, mais ceci ne constitue naturellement qu'un exemple. Chaque jambe 101 comporte un caisson tubulaire 102 rigidement solidaire d'une structure d'avion, et un balancier 103 articulé sur l'extrémité inférieure de ce caisson tubulaire en pouvant pivoter autour d'un axe Y perpendiculaire au plan longitudinal médian de l'avion, de façon que ledit balancier soit relevable verticalement avec sa paire de roues R. En partie haute, le caisson 102 est relié à un panneau 130 au niveau d'un axe transversal Z. On distingue également une bielle de structure 140 servant au contreventement de la jambe concernée. Dans le mode de réalisation particulier représenté ici, le caisson tubulaire 102 présente en outre inférieurement un élargissement, mieux visible sur la jambe centrale qui est représentée en coupe, se terminant par une chape 104 pour le montage articulé du balancier 103, et un organe 110 coulisse axialement à l'intérieur du caisson tubulaire 102.

Un amortisseur 10 est articulé entre un appendice 105 du balancier 103 et l'organe coulissant 110, lequel organe coulissant fait partie de la tringlerie de relevage et de descente du train. En l'espèce, cette tringlerie comprend une contre-fiche à alignement 120, et une biellette 123 couplée en rotation au bras supérieur de la contre-fiche 120. Un vérin de manoeuvre 125, associé à chacune des jambes 101, assure le mouvement correspondant en étant interposé entre l'axe Z parallèle à l'axe Y précité, correspondant à la partie haute du caisson tubulaire 102, et l'extrémité de la biellette 123 précitée.

On reconnaît pour l'amortisseur 10, le caisson 11, la tige-piston 12 et la tige-piston terminale creuse 51, visibles pour la jambe centrale qui est représentée en coupe partielle. L'amortisseur 10 est conforme à la structure illustrée en figure 1 et précédemment décrite.

Par la manoeuvre des vérins 125 de manoeuvre, le centre des paires de roues R varie entre une position C correspondant à la position train bas, et une position C' correspondant à une position train haut. En position train bas, il est cependant possible de commander le raccourcissement d'une jambe quelconque du train en agissant sur l'amortisseur concerné, ce raccourcissement s'effectuant naturellement sous la charge statique correspondante, et ce sans manoeuvre de la tringlerie de relevage des jambes. On a illustré en figure 2B un tel raccourcissement de jambe effectué pour la seule jambe avant. Le centre de la paire de roues R concernée passe alors de la position C de la figure 2A à une position C1 qui est à une hauteur h au-dessus du niveau précédent. Les niveaux sont repérés par une droite D pour la position train bas, et une droite D1 pour la position légèrement relevée.

Il sera intéressant pour bénéficier de toutes les fonctions possibles de prévoir que les amortisseurs 10 ont des circuits de commande agencés pour permettre une commande individuelle sélective où une commande groupée du rallongement ou du raccourcissement desdits amortisseurs.

Les amortisseurs 10 sont en outre de préférence dimensionnés pour permettre une course de raccourcissement suffisante pour amener la paire de roues de l'une quelconque des jambes 101 hors de contact avec le sol, par exemple pour un changement de pneumatique. Il est ainsi possible de relever la jambe dont on veut remplacer le pneumatique sans affecter les autres jambes du train.

Il est également intéressant de profiter de cette structure pour assurer une autre fonction, associée au roulage de l'aéronef sur la piste, en particulier lors d'un virage. En effet, les pneumatiques doivent supporter un moment de dérapage élevé lors des manoeuvres en virage, lequel est d'autant plus fort que l'angle de virage est important, comme c'est en particulier le cas pour un demi-tour. Dans ce cas, il peut s'avérer très intéressant de soulager le train en relevant au moins en partie la jambe avant du train, sans affecter les autres jambes qui assurent la charge. Dans le cas d'un train d'atterrissage principal à trois jambes, comme celui qui est illustré ici, cette manoeuvre de soulagement concernera la seule jambe avant comme cela est illustré sur la figure 2B. On peut naturellement imaginer, pour des avions très lourds, un train comportant plus de trois jambes, auquel cas la manoeuvre de soulagement pourra par exemple concerner les deux jambes qui sont le plus en avant.

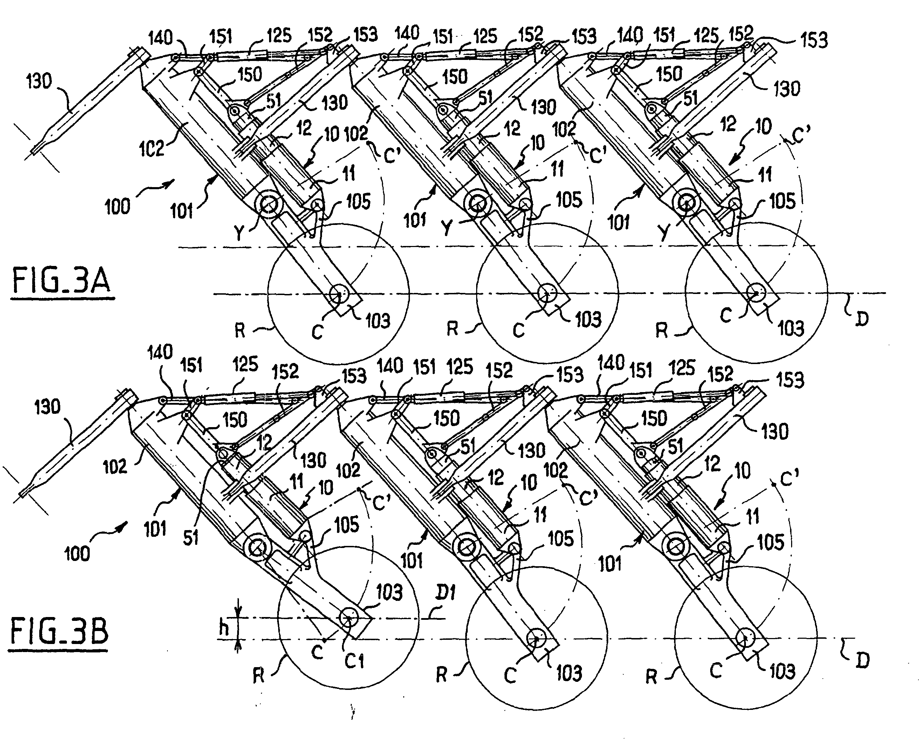

Les figures 3A et 3B illustrent un train d'atterrissage de conception légèrement différente dont les jambes indépendantes sont équipées du même amortisseur 10. La différence avec le train des figures 2A et 2B réside essentiellement dans la structure de la tringlerie de manoeuvre du train. En effet, la partie haute de chaque amortisseur 10 est alors articulée sur un levier 150 relié inférieurement à une contrefiche à alignement 152 qui est accrochée sur un appendice 153 du panneau 130, et supérieurement à une biellette 151 qui est reliée au vérin de manoeuvre 125. Comme pour le train des figures 2A et 2B, on retrouve une bielle de structure 140. Là encore, l'amortisseur 10 est accroché sur un élément mobile qui n'est plus l'élément coulissant 110 des figures 2A et 2B, mais est le levier 150 faisant partie de la tringlerie de manoeuvre du train.

On retrouve les mêmes fonctions et les mêmes avantages que précédemment, pour le changement d'assiette en cas de commande simultanée de tous les amortisseurs concernés, ou pour un raccourcissement individuel d'une jambe dans le cas d'un changement de pneumatique, ou encore pour un raccourcissement individuel de la seule jambe avant dans le cas d'un soulagement lors des manoeuvres en virage.

Dans un cas comme dans l'autre, les organes de verrouillage hydraulique des amortisseurs 10 seront de préférence commandables simultanément pour permettre, par leur ouverture, un barraquage naturel de l'aéronef par la seule charge statique exercée par ledit aéronef.

L'invention n'est pas limitée aux modes de réalisation qui viennent d'être décrits, mais englobe au contraire toute variante reprenant, avec des moyens équivalents, les caractéristiques essentielles énoncées plus haut.

## Revendications

1. Amortisseur de train d'atterrissage d'aéronef, comportant un caisson (11) et une tige-piston (12) coulissant dans ledit caisson coaxialement à l'axe (X) de celui-ci, ladite tige-piston (12) délimitant avec le caisson (11) une chambre principale (14) de fluide hydraulique et une chambre annulaire (15) de fluide hydraulique communiquant avec ladite chambre principale par l'intermédiaire d'un diaphragme associé (19), et ladite tige-piston (12) présentant intérieurement deux chambres adjacentes (23, 24) isolées l'une de l'autre par un piston séparateur (21), dont une chambre (23) de fluide hydraulique qui communique avec la chambre principale (14) par l'intermédiaire d'un diaphragme associé (19') et une chambre (24) de gaz sous pression, **caractérisé en ce que** la chambre de fluide hydraulique (23) de la tige-piston (12) est une chambre supérieure, tandis que la chambre de gaz sous pression (24) de ladite tige-piston (12) est une chambre inférieure, et **en ce que** la tige-piston (12) est prolongée, au-delà de la chambre inférieure (24) de gaz sous pression, par un fourreau (50) dans lequel coulisse télescopiquement une tige-piston terminale creuse (51) en formant une chambre inférieure (57) de fluide hydraulique qui est fermée par un organe actionnable (65) de verrouillage hydraulique, ladite tige-piston terminale (51) délimitant avec le fourreau (50) une chambre annulaire inférieure (58) de fluide hydraulique qui est reliée à un circuit de commande associé (59, 60, 75), permettant ainsi de rallonger ou de raccourcir la longueur totale de l'amortisseur (10) en commandant la sortie ou la rentrée de ladite tige-piston terminale (51), et ladite tige-piston terminale (51) étant en outre équipée d'une chambre d'expansion (62) servant à compenser les variations de volume du fluide hydraulique présent dans la chambre inférieure (57) de fluide hydraulique.

2. Amortisseur selon la revendication 1, **caractérisé en ce que** la chambre inférieure (57) de fluide hydraulique est séparée de la chambre inférieure (24) de gaz sous pression par une cloison intermédiaire (20) de la tige-piston (12).

3. Amortisseur selon la revendication 2, **caractérisé en ce que** la cloison intermédiaire (20) de la tige-piston (12) constitue une butée de rentrée maximale de la tige-piston terminale (51) dans le fourreau associé (50), ledit fourreau présentant intérieurement un épaulement intermédiaire (54) formant butée de sortie maximale de ladite tige-piston terminale (51).

4. Amortisseur selon l'une quelconque des revendications 1 à 3, **caractérisé en ce que** la chambre d'expansion (62) est réalisée sous la forme d'un accumulateur à air ou à ressort.

5. Amortisseur selon l'une quelconque des revendications 1 à 4, **caractérisé en ce que** le circuit de commande associé à la chambre annulaire inférieure (58) de fluide hydraulique comporte une électrovanne (75) actionnable individuellement.

6. Train d'atterrissage relevable d'aéronef, du type à relevage vertical, comportant une pluralité de jambes (101) agencées les unes derrière les autres pour former, en position train bas, une rangée parallèle au plan longitudinal médian de l'aéronef, chaque jambe (101) comportant un caisson tubulaire (102) rigidement solidaire d'une structure d'aéronef, un balancier (103) articulé sur l'extrémité inférieure dudit caisson de façon que ledit balancier soit déplaçable dans un plan vertical avec sa paire de roues (R), et un amortisseur interposé entre un appendice (105) du balancier (103) et un élément mobile (110 ; 150) faisant partie de la tringlerie de manoeuvre du train, **caractérisé en ce que** l'amortisseur de chaque jambe (101) est un amortisseur (10) selon l'une au moins des revendications 1 à 5, permettant de relever sélectivement au moins une paire de roues (R) lorsque l'aéronef est à l'arrêt ou en déplacement lent au sol.

7. Train d'atterrissage selon la revendication 6, **caractérisé en ce que** les amortisseurs (10) dudit train ont des circuits de commande (59, 60, 65) agencés pour permettre une commande individuelle sélective ou une commande groupée du rallongement ou du raccourcissement desdits amortisseurs.

8. Train d'atterrissage selon la revendication 6 ou la revendication 7, **caractérisé en ce que** les amortisseurs (10) dudit train sont dimensionnés pour permettre une course de raccourcissement suffisante pour amener la paire de roues (R) de l'une quelconque des jambes (101) dudit train hors de contact avec le sol, par exemple pour un changement de pneumatique.

9. Train d'atterrissage selon la revendication 6 ou la revendication 7, **caractérisé en ce que** l'amortisseur (10) de la jambe avant (101) dudit train est dimensionné pour permettre une course de raccourcissement suffisante pour soulager le train lors d'un virage au sol, la paire de roues (R) concernée étant hors de contact ou légèrement en contact avec le sol.

10. Train d'atterrissage selon l'une quelconque des revendications 6 à 9, **caractérisé en ce que** les organes de verrouillage hydraulique (65) des amortisseurs (10) sont commandables simultanément pour permettre, par leur ouverture, un barraquage naturel de l'aéronef par la seule charge statique exercée par ledit aéronef.

## Patentansprüche

1. Stoßdämpfer für ein Fahrwerk eines Flugzeuges, umfassend ein Gehäuse (11) und eine Kolbenstange (12), die in dem Gehäuse koaxial zu dessen Achse (X) gleitet, wobei die Kolbenstange (12) mit dem Gehäuse (11) eine Hauptkammer (14) mit Hydraulikfluid und eine Ringkammer (15) mit Hydraulikfluid begrenzt, die mit der Hauptkammer über eine dazugehörige Membran (19) in Verbindung steht, und wobei die Kolbenstange (12) innen zwei aneinander angrenzende Kammern (23, 24) aufweist, die voneinander durch einen Trennkolben (21) getrennt sind, darunter eine Kammer (23) mit Hydraulikfluid, die mit der Hauptkammer (14) über eine dazugehörige Membran (19') in Verbindung steht, und eine Kammer (24) mit Druckgas, **dadurch gekennzeichnet, dass** die mit Hydraulikfluid gefüllte Kammer (23) der Kolbenstange (12) eine obere Kammer ist, während die mit Druckgas gefüllte Kammer (24) der Kolbenstange (12) eine untere Kammer ist, und dass die Kolbenstange (12) jenseits der unteren Kammer (24) mit Druckgas durch eine Hülse (50) verlängert ist, in der teleskopisch eine hohle Kolbenendstange (51) gleitet und dabei eine untere Kammer (57) mit Hydraulikfluid ausbildet, die von einem betätigbaren hydraulischen Verriegelungselement (65) verschlossen ist, wobei die Kolbenendstange (51) mit der Hülse (50) eine untere Ringkammer (58) mit Hydraulikfluid begrenzt, die mit einem dazugehörigen Steuerkreis (59, 60, 75) verbunden ist, der so ein Verlängern bzw. ein Verkürzen der Gesamtlänge des Stoßdämpfers (10) ermöglicht, indem er das Ausfahren und das Einfahren der Kolbenendstange (51) steuert, und wobei die Kolbenendstange (51) ferner mit einer Expansionskammer (62) versehen ist, die dazu dient, die Volumenschwankungen des Hydraulikfluids, die in der unteren Kammer (57) mit Hydraulikfluid vorhanden sind, auszugleichen.

2. Stoßdämpfer nach Anspruch 1, **dadurch gekennzeichnet, dass** die untere Kammer (57) mit Hydraulikfluid von der unteren Kammer (24) mit Druckgas durch eine Zwischenwand (20) der Kolbenstange (12) getrennt ist.

3. Stoßdämpfer nach Anspruch 2, **dadurch gekennzeichnet, dass** die Zwischenwand (20) der Kolbenstange (12) einen Anschlag für ein maximales Einfahren der Kolbenendstange (51) in die dazugehörige Hülse (50) bildet, wobei die Hülse innen eine Zwischenschulter (54) aufweist, die einen Anschlag für ein maximales Ausfahren der Kolbenendstange (51) bildet.

4. Stoßdämpfer nach einem der Ansprüche 1 bis 3, **dadurch gekennzeichnet, dass** die Expansionskammer (62) in Form eines Luft- oder Federspeichers ausgebildet ist.

5. Stoßdämpfer nach einem der Ansprüche 1 bis 4, **dadurch gekennzeichnet, dass** der mit der unteren Ringkammer (58) mit Hydraulikfluid verbundene Steuerkreis ein individuell betätigbares Elektroventil (75) umfasst.

6. Einziehbares Flugzeug-Fahrwerk, vom Typ mit vertikalem Einzug, umfassend eine Vielzahl von Fahrwerkbeinen (101), die hintereinander angeordnet sind, um in der eingezogenen Position eine Reihe zu bilden, die parallel zur Mittellängsebene des Flugzeuges ist, wobei jedes Bein (101) ein rohrförmiges Gehäuse (102) umfasst, das starr mit einer Flugzeugstruktur verbunden ist, einen Schwenkhebel (103), der an dem unteren Ende des Gehäuses derart angelenkt ist, dass er in einer vertikalen Ebene mit seinem Räderpaar (R) bewegbar ist, sowie einen Stoßdämpfer, der zwischen einem Ansatzstück (105) des Schwenkhebels (103) und einem beweglichen Element (110; 150) angeordnet ist, das zum Lenkgestänge des Fahrwerks gehört, **dadurch gekennzeichnet, dass** der Stoßdämpfer jedes Fahrwerkbeines (101) ein Stoßdämpfer (10) nach mindestens einem der Ansprüche 1 bis 5 ist, der ein selektives Einziehen mindestens eines Räderpaares (R) bei Stillstand des Flugzeuges oder bei einer langsamen Fahrt am Boden ermöglicht.

7. Fahrwerk nach Anspruch 6, **dadurch gekennzeichnet, dass** die Stoßdämpfer (10) des Fahrwerks Steuerkreise (59, 60, 75) haben, die derart ausgebildet sind, dass sie eine selektive individuelle Steuerung oder eine Gruppensteuerung der Verlängerung oder der Verkürzung der Stoßdämpfer gestatten.

8. Fahrwerk nach Anspruch 6 oder Anspruch 7, **dadurch gekennzeichnet, dass** die Stoßdämpfer (10) des Fahrwerks derart bemessen sind, dass sie einen ausreichenden Verkürzungshub ermöglichen, um das Räderpaar (R) irgendeines Fahrwerkbeines (101) des Fahrwerks außer Kontakt mit dem Boden zu bringen, beispielsweise für einen Reifenwechsel.

9. Fahrwerk nach Anspruch 6 oder Anspruch 7, **dadurch gekennzeichnet, dass** der Stoßdämpfer (10) des vorderen Beines (101) des Fahrwerks derart bemessen ist, dass er einen ausreichenden Verkürzungshub ermöglicht, um das Fahrwerk bei einer Wendung am Boden zu entlasten, wobei das betreffende Räderpaar (R) außer Kontakt oder leicht in Kontakt mit dem Boden ist.

10. Fahrwerk nach einem der Ansprüche 6 bis 9, **dadurch gekennzeichnet, dass** die hydraulischen Verriegelungselemente (65) der Stoßdämpfer (10) gleichzeitig steuerbar sind, um durch ihre Öffnung ein natürliches Absenken des Flugzeuges einzig durch die statische Last, die von dem Flugzeug ausgeübt wird, zu gestatten.

## Claims

1. A shock absorber for airplane landing gear, the shock absorber comprising a strut (11) and a rod piston (12) sliding in said strut coaxially about its axis (X), said rod piston (12) co-operating with the strut (11) to define a main hydraulic fluid chamber (14) and an annular hydraulic fluid chamber (15) communicating with said main chamber via an associated diaphragm (19), and said rod piston (12) presenting internally two adjacent chambers (23, 24) that are isolated from each other by a separator piston (21), one of said chambers (23) being a hydraulic fluid chamber in communication with the main chamber (14) via an associated diaphragm (19') and the other chamber (24) being a pressurized gas chamber, the shock absorber being **characterized in that** the hydraulic fluid chamber (23) of the rod piston (12) is an upper chamber while the pressurized gas chamber (24) of said rod piston (12) is a lower chamber, and **in that** the rod piston (12) is extended beyond the lower, pressurized gas chamber (24) by a sheath (50) in which there slides telescopically a hollow terminal rod piston (51) forming a bottom hydraulic fluid chamber (57) that is closed by an actuatable hydraulic locking member (65), said terminal rod piston (51) co-operating with the sheath (50) to define a bottom annular hydraulic fluid chamber (58) which is connected to an associated control circuit (59, 60, 75), thus enabling the total length of the shock absorber (10) to be lengthened or shortened by causing said terminal rod piston (51) to be extended or retracted, and said terminal rod piston (51) also being fitted with an expansion chamber (62) serving to compensate for variations in the volume of the hydraulic fluid present in the bottom hydraulic fluid chamber (57).

2. A shock absorber according to claim 1, **characterized in that** the bottom hydraulic fluid chamber (57) is separated from the lower, pressurized gas chamber (24) by an intermediate partition (20) of the rod piston (12).

3. A shock absorber according to claim 2, **characterized in that** the intermediate partition (20) of the rod piston (12) constitutes a maximum retraction abutment for the terminal rod piston (51) in the associated sheath (50), said sheath presenting internally an intermediate shoulder (54) forming a maximum extension abutment for said terminal rod piston (51).

4. A shock absorber according to any one of claims 1 to 3, **characterized in that** the expansion chamber (62) is made in the form of an air accumulator or a spring.

5. A shock absorber according to any one of claims 1 to 4, **characterized in that** the control circuit associated with the bottom annular hydraulic fluid chamber (58) includes an individually-actuatable solenoid valve (75).

6. A retractable airplane undercarriage of the vertically-raisable type, comprising a plurality of legs (101) arranged one behind another to form, in the undercarriage-down position, a row parallel to the longitudinal midplane of the airplane, each leg (101) comprising a tubular strut (102) rigidly secured to a structural part of the airplane, a rocker (103) hinged to the bottom end of said strut so that said rocker can be moved in a vertical plane together with its pair of wheels (R), and as hock absorber interposed between an appendix (105) of the rocker (103) and a moving element (110; 150) forming part of the drive rodding of the undercarriage, the undercarriage being **characterized in that** shock absorber of each leg (101) is a shock absorber according to at least one of claims 1 to 5, enabling at least one pair of wheels (R) to be raised selectively when the aircraft is stationary or is taxiing slowly.

7. An undercarriage according to claim 6, **characterized in that** the shock absorbers (10) of said undercarriage have control circuits (59, 60, 65) arranged to enable selective individual control or group control over the lengthening or shortening of said shock absorbers.

8. An undercarriage according to claim 6 or claim 7, **characterized in that** the shock absorbers (10) of said undercarriage are dimensioned to enable a shortening stroke to be obtained that is sufficient to bring the pair of wheels (R) of any one of the legs (101) of said undercarriage out of contact with the ground, e.g. in order to change a tire.

9. An undercarriage according to claim 6 or claim 7, **characterized in that** the shock absorber (10) of the front leg (101) of said undercarriage is dimensioned to make a shortening stroke possible that is sufficient to unload the undercarriage while turning on the ground, the pair of wheels (R) in question being out of contact with the ground or in light contact only therewith.

10. An undercarriage according to any one of claims 6 to 9, **characterized in that** the hydraulic locking members (65) of the shock absorbers (10) can be controlled simultaneously so as to make it possible, on being opened, to allow the airplane to kneel naturally, solely under the static load exerted by said airplane.
